# EUROPEAN PATENT SPECIFICATION

(11) **EP 2 987 294 B1**
(45) Date of publication and mention of the grant of the patent: **19.02.2020**
(21) Application number: 13718484.2
(22) Date of filing: 17.04.2013
(51) Int. Cl.: H04L 29/06

(54) **VEHICLE TO VEHICLE DATA COMMUNICATION SYSTEM**
FAHRZEUG ZU FAHRZEUG DATENKOMMUNIKATIONSSYSTEMS
SYSTÈME DE COMMUNICATION DE DONNEES DE VÉHICULE À VÉHICULE

(43) Date of publication of application: 24.02.2016
(73) Proprietor: Harman International Industries, Incorporated, Stamford, CT 06901 (US)
(72) Inventor: HAMPIHOLI, Vallabha, Bangalore Karnataka 560035 (IN); BELUR, Srinivasa, Bangalore Karnataka 560085 (IN)
(74) Representative: Grünecker Patent- und Rechtsanwälte PartG mbB
(86) International application number: PCT/US2013/037036
(87) International publication number: WO 2014/171940

(56) References cited:
- WO-A1-01/59706
- US-A1- 2012 317 161
- US-B1- 6 389 471

## Description

### 1. TECHNICAL FIELD.

This disclosure pertains to data sharing, and more specifically to a system to share audio data between two or more vehicles.

### 2. BACKGROUND.

Vehicles today are equipped with at least basic audio playback systems, such systems provide varying capabilities. While low end playback systems may only be capable of playing FM/AM radio, high end systems might be able to receive and play audio data from a smartphone or satellite radio. The audio data may be streamed over a Digital Audio Broadcast (DAB) to the system

US 2012/317161 A1 (BAI FAN [US] ET AL) 13 December 2012 (2012-12-13) discloses an onboard computer system including instructions causing a processor to store a first-user media profile indicating media preferences of a user. The processor also determines that the vehicle is encountering a second vehicle and receives a second-user media profile. The processor also evaluates the profiles to determine whether the profiles bear a predetermined similarity and, in response to determining the similarity exists, identifies recommended media, based on characteristics of the profiles, and initiates provision of the recommended media to one of the users of the first vehicle and the user of the second vehicle.

### SUMMARY

A vehicle to vehicle data communication system enables audio data communication between two vehicles via a wireless network. The vehicle to vehicle data communication system may include a server configured to transfer audio data being played in a host vehicle to a client vehicle so that both the host vehicle and the client vehicle play substantially the same audio content at substantially the same time. The system may establish communication between the host vehicle and the client vehicle. The system, to establish a connection between the client vehicle and the host vehicle, may receive at the server an initial connection request from the client vehicle, and/or receive at the server a connection request from the host vehicle. The server may authenticate the client vehicle and the host vehicle, and establish communication between the vehicles. Following establishment of the connection, the server may receive from the host vehicle the audio data being played in the host vehicle, and transmit the audio data to the client vehicle. Prior to transmission to the client vehicle, the server may also process the audio data and transmit processed audio data to the client vehicle. The processing may customize the audio data based on determined conditions, such as the configuration of the audio system included in the client vehicle, to maintain or enhance the quality of the sound of the playback of the processed audio data in the client vehicle.

Other systems, methods, features and advantages of the invention will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The invention may be better understood with reference to the following drawings and description. The components in the figures are not necessarily to scale, emphasis instead being placed upon illustrating the principles of the invention. Moreover, in the figures, like referenced numerals designate correspondingly similar components, modules, units, and/or parts throughout the different views.
FIG. 1 is a block diagram of an example vehicle to vehicle data communication system.
FIG. 2 is a block diagram detailing the components that may be included in a server of an example vehicle to vehicle data communication system.
FIG. 3 is a block diagram detailing the components that may be included in a host vehicle of an example vehicle to vehicle data communication system.
FIG. 4 is a block diagram detailing the components that may be included in a client vehicle of an example vehicle to vehicle data communication system.
FIG. 5A and FIG. 5B are, respectively, an example of a format of an initial connection request to connect with a host vehicle by a client vehicle and an example of such an initial connection request.
FIG. 6A and FIG. 6B are, respectively, an example of a format of a vehicle authentication data and an example of such a vehicle authentication data.
FIG. 7 is an example of voting information from a vehicle involved in an example vehicle to vehicle data communication system.
FIG. 8A and 8B are, respectively, an example of a command format and an example of a command.
FIG. 9A and FIG. 9B are, respectively, an example of a setup information format and an example of a setup information.
FIG. 10 is a block diagram of an example method according to an example of the vehicle to vehicle data communication system.

### DETAILED DESCRIPTION

It is to be understood that the following description of examples of implementations are given only for the purpose of illustration and are not to be taken in a limiting sense. The partitioning of examples in function blocks, modules or units shown in the drawings is not to be construed as indicating that these function blocks, modules or units are necessarily implemented as physically separate units. Functional blocks, modules or units shown or described may be implemented as separate units, circuits, chips, functions, modules, or circuit elements. Alternatively, or in addition, one or more functional blocks or units may also be implemented in a common circuit, chip, circuit element or unit.

Passengers in one or more vehicles, client vehicles, may want to hear the same audio data that is being played in another vehicle, host vehicle. The host vehicle may be playing the audio data from a source such as a disk or a music player or a memory unit that is only available in the host vehicle. It may also be the case that the host vehicle is receiving the audio data from a DAB source that the client vehicle(s) may not be capable of receiving from. A vehicle to vehicle data communication system may include a server that establishes a connection between a client device and a host device via the server. The host device may transmit the audio data to the server and the server in turn may transmit the audio data to the client device. The server may process the audio data according to the capabilities of the client device and transmit customized audio data to the client device. The client device may be connected to the audio system in the client vehicle and the host device may be connected to the audio system in the host vehicle. The audio system in the client vehicle may play the customized audio data and the host vehicle may play the audio data so that occupants of both, the host vehicle and the client vehicle listen to substantially the same audio content at substantially the same time.

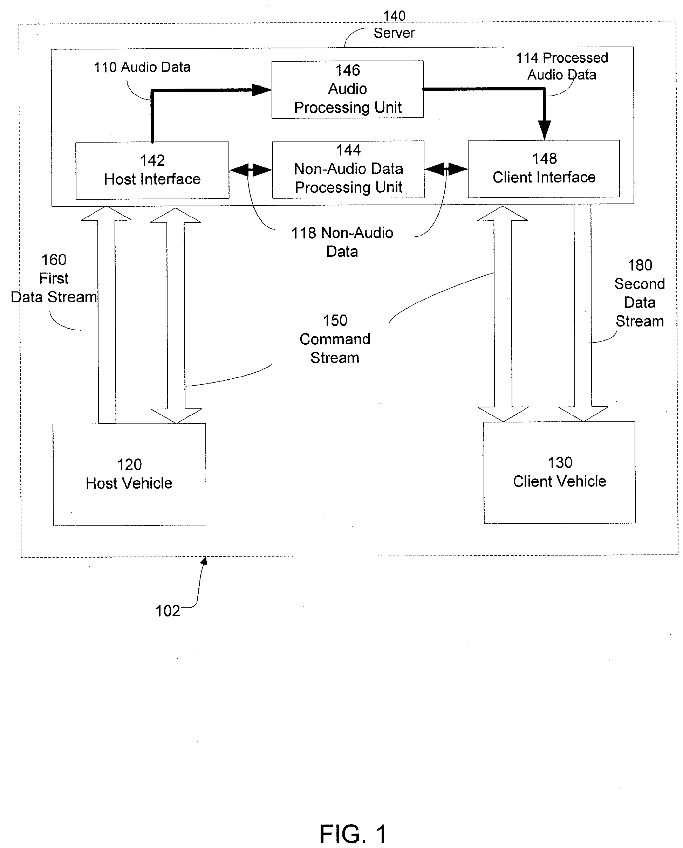

FIG. 1 is a block diagram of an example vehicle to vehicle data communication system 102. The system may include a host vehicle 120, a client vehicle 130, and a server 140. In one example of operation of the system, the client vehicle 130 may request the host vehicle 120 to transmit audio data 110 that may be currently playing in the host vehicle 120. The request may be sent to the host vehicle 120 via the server 140 through a command stream 150. The host vehicle 120 in response may transmit the audio data 110 as part of a first data stream 160 to the server 140. The server 140 may process the audio data 110 and in turn transmit processed audio data 114 to the client vehicle 130. The processed audio data 114 may be transmitted to the client vehicle 130 via a second data stream 180. The client vehicle 130 may then playback the processed audio data 114 so that occupants of both, the host vehicle 120 and the client vehicle 130 would be listening to substantially the same audio content.

The server 140 may be a computer device that includes hardware, software and/or firmware. The server 140 may wirelessly communicate with the host vehicle 120 and the client vehicle 130 via the command stream 150, the first data stream 160, and the second data stream 180. The server 140 may receive, from the host vehicle 120, the first data stream 160 that includes the audio data 110 and transmit, to the client vehicle 130, the second data stream 180 that includes the processed audio data 114. To transform the audio data 110 into the processed audio data 114 and perform other functions, the server 140 may include components such as a host interface 142, a non-audio data processing unit 144, an audio processing unit 146, and a client interface 148. In other examples, the non-audio data processing unit 144 and the audio processing unit 146 may be a single unit or more than two units. The term "unit" may be defined to include one or more of a plurality of executable modules. As described herein, the modules are defined to include software, hardware or some combination thereof executable by a processor. Software modules may include instructions stored in memory, or other memory device that are executable by the processor. Hardware modules may include various devices, components, circuits, gates, circuit boards, and the like that are executable, directed, and/or controlled for performance by the processor.

The client interface 148 may include hardware or a combination of hardware and software that enables communication over a network. The client interface 148 may include a network interface card (NIC). Alternatively or in addition, the network interface may include an embedded component as part of a circuit board, a computer mother board, a router, an expansion card, a printer interface, a USB (universal serial bus) device, or as part of any other hardware. The network may be a packet based network. The network may include a local area network (LAN), a wireless local area network (WLAN), a WI-FI® (a registered trademark of Wireless Ethernet Compatibility Alliance, Inc. of Austin, Texas) network, a personal area network (PAN), a wide area network (WAN), the Internet, an Internet Protocol (IP) network, any other communications network, or any combination thereof. The network may utilize any protocol of 3G/4G/EDGE/4G LTE, Bluetooth® (a registered trademark of Bluetooth Sig, Inc. of Kirkland, Washington), WiMax® (a registered trademark of WiMax Forum of San Diego, California), GPRS, UMTS, HSDPA, HSPA or any other protocol or any combination thereof.

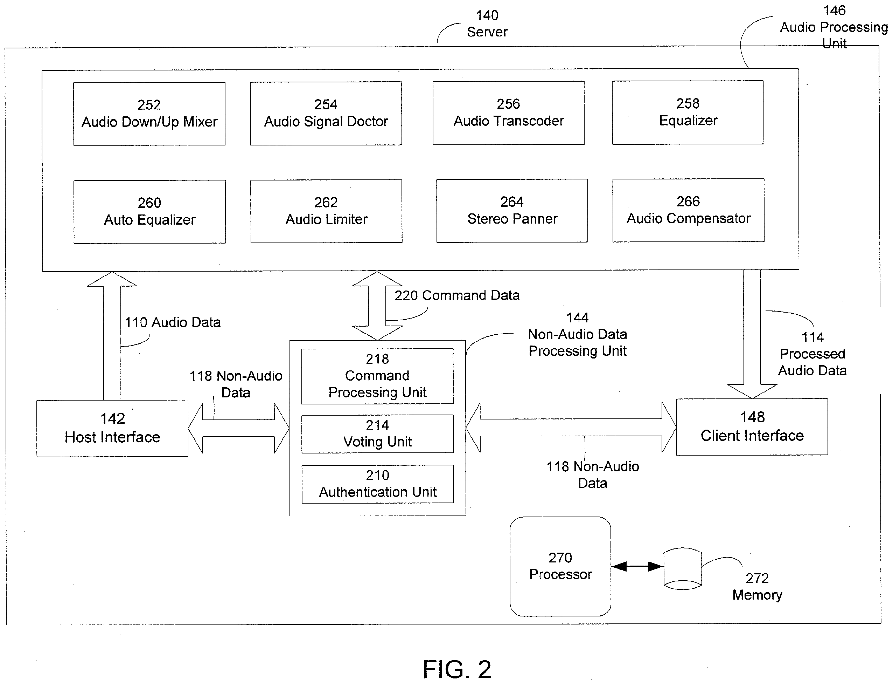

The client interface 148 may receive a connection request from the client vehicle 130 for audio content from the host vehicle 120. Along with the connection request the client vehicle 130 or the host vehicle 120 may transmit to the server 140 various non-audio data 118. The client interface 148 and the host interface 142 may forward the non-audio data 118 to the non-audio data processing unit 144 for further processing. For performing such processing, the non-audio data processing unit 144 may include components such as an authentication unit 210, a voting unit 214, and a command processing unit 216 as shown in FIG. 2. The server 140 may further include a processor 270 and a non-transitory computer readable memory 272. The processor 270 may perform tasks in the server and control the operation of the server 140. The memory 272 may include instructions executable by the processor 270 or the other units of the server 140 previously listed.

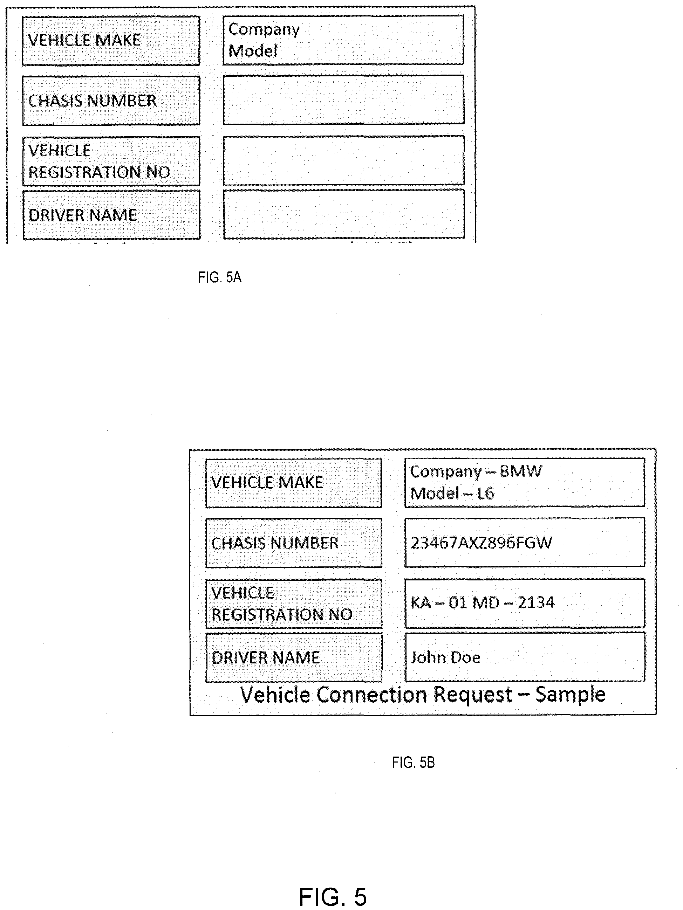

The non-audio data processing unit 144 may include hardware, software or a combination of hardware and software that enables processing of the non-audio data 118. The non-audio data 118 may be an initial connection request to commence the transfer of audio content. FIG. 5A and 5B are examples of an initial connection request template and an initial connection request. The initial connection request may include information related to the host vehicle 120 from which the client vehicle 130 may wish to receive audio content. Such information may include a unique identifier of the host vehicle, such as, vehicle make, chassis number, and vehicle registration number among other information. The initial connection request may be initiated by the client vehicle 130, the host vehicle 120, or both.

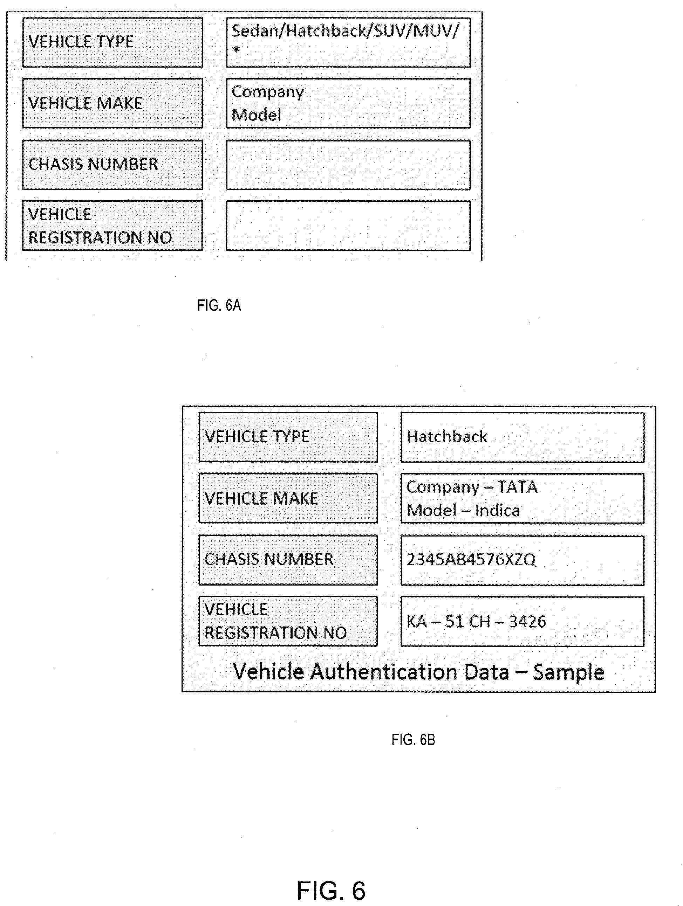

In another instance, the non-audio data 118 may be data related to authenticating the host vehicle 120 and/or the client vehicle 130. The authentication unit 210 may receive such authentication information. The authentication unit 210 may include hardware, software or a combination of hardware and software to authenticate an identity of the host vehicle 120 and/or the client vehicle 130 before beginning processing of the audio data 110. As used herein, authentication is equivalent to verification of an identity. In an example, the authentication may involve an authentication token such as a password, a pass-key, a security key or any other information that may be used for authentication. In other examples, the authentication token may be a cryptographic key. Authenticating the authentication token may include comparison of the authentication token to a reference value. Verifying the cryptographic key may include checking whether the cryptographic key, such as a cryptographic public key, corresponds to another cryptographic key such as, a cryptographic private key. The cryptographic key may be a cryptographic symmetric key, a cryptographic public key, a cryptographic private key, or a hash value. The hash value may be further encrypted using a cryptographic key, in particular, a cryptographic public key or a cryptographic private key. The cryptographic key or the hash value may be based on a vehicle type, vehicle make, vehicle chassis number or vehicle registration number among other information related to a vehicle. FIG. 6A and 6B are examples of a template of authentication information and authentication information. The authentication information may involve the unique identifier of the vehicle and/or a user of the vehicle and the authentication token and/or any other information that can be used to verify identity of the vehicle and/or the user, where the vehicle may be either the host vehicle or the client vehicle.

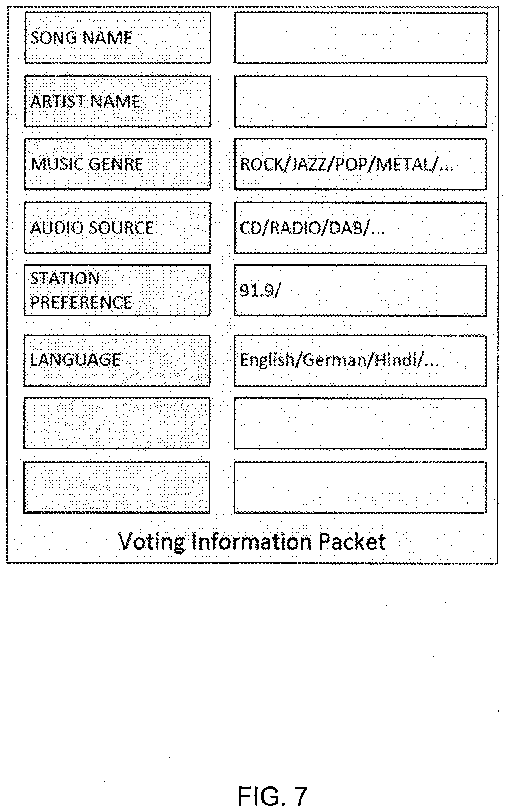

In one example, the non-audio data 118 may be voting data for users to determine the contents of the audio data 110 that should be played back. Such voting data is received by the voting unit 214. The voting unit 214 may include hardware, software or a combination of hardware and software to determine a result of a voting among the host vehicle 120 and/or the client vehicle 130. The voting may involve receiving an indication from the client vehicle 130 regarding a choice of the audio data 110. FIG. 7 is an example of voting information that may be received by the server 140 the client vehicle 130 and/or the host vehicle 120. The client vehicle 130 may be one of many client vehicles connected to the host vehicle 120 through the server 140 and each client vehicle 130 may be restricted to one vote. The host vehicle 120 may or may not participate in the vote. The voting may also involve keeping a record of such indications. The voting unit 214 may further determine a selection of the audio data 110 based on the choices made by the client vehicle 130.

The selection may be determined by a number of votes received for a particular attribute of the audio data 110. Such attributes related to the audio data 110 may include one or more of artist, genre, album, year, source of the audio data, length of the audio data among several other attributes possible, and combinations thereof. The server 140 may transmit the attributes of available audio data from the various audio sources accessible by the host vehicle 120. The host vehicle 120 and/or the client vehicle 130 can vote on which possible audio data to playback, based on the attributes. The voting unit 214 may collect such votes and determine a selected audio data. The voting unit 214 may aggregate the voting information from the one or more client vehicles 130 and generate and send a command to the host vehicle 120 to request playback the selected audio data from a particular source available to the host vehicle 120. The host vehicle 120 may accept or reject such a request. The host vehicle 120, on accepting the request, may then begin streaming the selected audio data to the server 140. If the host vehicle 120 rejects the request or if the selected audio is unavailable, the voting unit 214 may provide the client vehicle 130 with options of other audio content. Such options may be dictated by the host vehicle 120. In another example, the host vehicle 120 may dictate the contents of the audio data 110 and thus the first data stream 160.

In an example, the non-audio data 118 may be one of several commands to be applied to the first data stream 160, the second data stream 180 or any other component involved in the vehicle to vehicle data communication. The non-audio data 118 may also be an acknowledgement indicating success or failure of such a command. Such command related information may be received by the command processing unit 218. The command processing unit 218 may include hardware, software or a combination of hardware and software to process any commands received by the server 140 through the command stream 150. The command may be a request from the client vehicle 130 to receive the audio data 110 from a particular source in the host vehicle 120. The command may further be a request from the client vehicle 130 to receive the second data stream 180 in a particular audio format. In one example, the command may be used by the server 140 to determine how the audio processing unit 146 processes the audio data 110 before transmitting the processed audio data 114 to the client vehicle 130. In an example of operation of the system, the command processing unit 218 may be able to control the streaming of the processed audio data 114 to the client vehicle 130 by processing commands such as play, pause, and stop. In another example, the command processing unit 218 may process commands to alter quality or audio format of the audio data 110 according to the capabilities of the client vehicle 130. In another example, the command processing unit 218 may control the rate of streaming the processed audio data 114 according to the commands from the client vehicle 130. The command processing unit 218 may further control the rate of streaming the audio data 110 from the host vehicle to the server 140. Command data 220 may be transmitted by the command processing unit 218 to the audio processing unit 146.

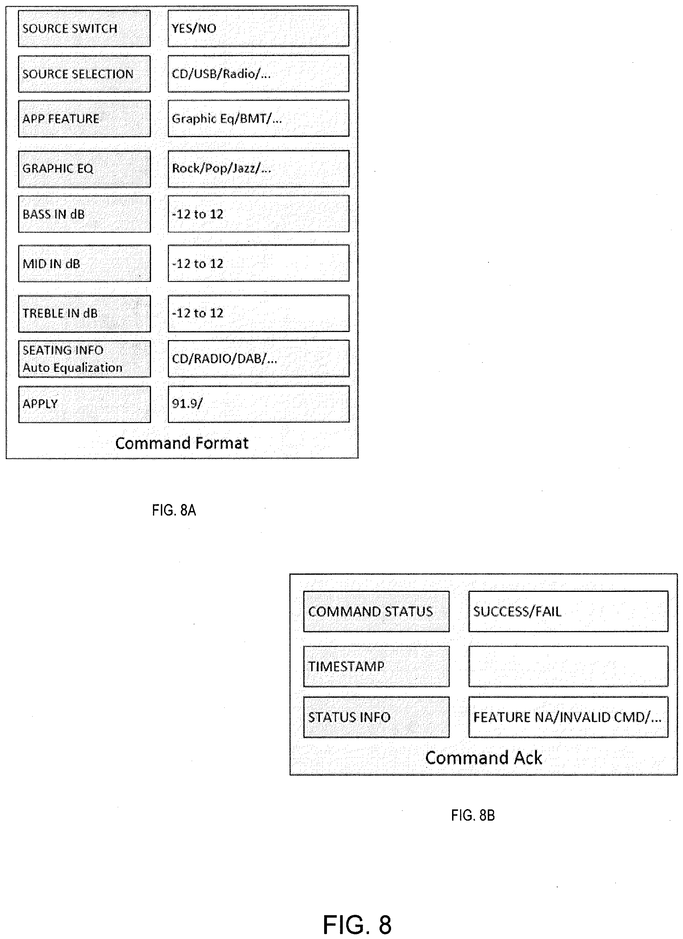

FIG. 8A and 8B are examples of a command format and an acknowledgement of a command. The command data 220 may include information necessary for the operation of the command. For example, if the command requests applying bass value of '5' to the audio data 110, the corresponding command would specify '5' in the 'Bass in dB' field of the command template of FIG 8A. The command format described in FIG. 8A is just one example of such a command format. On completion of the operation successfully, an acknowledgement may be sent to the device that made the command request. In another example operation of the system, an occupant of the client vehicle 130 may alter the quality of the processed audio data 114 by transmitting commands to the server 140. The occupant may request modifying audio format or a particular equalization setting or any other attribute associated with the processed audio data 114.

In addition or alternatively, the command processing unit 218 may assist the voting unit 214 and the authentication unit 210 in the respective functioning of the voting unit 214 and the authentication unit 210. Based on the results of the command processing unit 218 the server 140 may communicate with either the client vehicle 130 via the client interface 148 or the host vehicle 120 via the host interface 142.

The host interface 142 may include hardware or a combination of hardware and software that enables communication over the network. The host interface 142 may be a network interface card (NIC). Alternatively or in addition, the network interface may include an embedded component as part of a circuit board, a computer mother board, a router, an expansion card, a printer interface, a USB (universal serial bus) device, or as part of any other hardware. The host interface may transmit commands from the server 140 to the host vehicle 120 via the command stream 150. The host interface may receive non-audio data 118 from the host vehicle 120 via the command stream 150. The host interface may forward such non-audio data 118 to the non-audio data processing unit 144. The host interface may also receive the first data stream 160 from the host vehicle 120 and forward the audio data 110 included in the first data stream 160 to the audio processing unit 146.

The audio processing unit 146 may include hardware, software or a combination of hardware and software to process the audio data 110 and output the processed audio data 114. During example operation, the audio processing may involve passing the audio data 110 directly through as processed audio data 114. In another example, the audio processing may involve changing the audio data 110 by one or more of the subcomponents of the audio processing unit 146. Such change to the audio data 110 may be referred to as "processing", "customization", "altering", or "conversion" of the audio data 110 into the processed audio data 114. The subcomponents involved in the audio processing unit 146 may at least include an audio down/up mixer 252, an audio signal doctor 254, an audio transcoder 256, an equalizer 258, an auto equalizer 260, an audio limiter 262, an audio panner 264, and an audio compensator 266 as shown in FIG. 2.

The audio processing may further involve transcoding the audio data 110 using the audio transcoder 256. The transcoding may involve changing the format of the audio data 110. The audio data 110 may be received by the server 140 in one of several audio formats such as pulse code modulation format, MP3, WMV, WAV, AAC or any other format. For example, the audio data 110 received from the host vehicle 120 may be in an audio format that is not compatible with the client vehicle 130. In another example, client vehicle 130 may have a preferred audio format which is different than the audio format in which the audio data 110 is received. The server 140 may request from the client vehicle 130 information indicating a preferred or compatible audio format of the client vehicle 130. The audio processing unit 146 may then transcode the audio data 110 into the preferred audio format and transmit the processed audio data 114, in this case the transcoded audio data to the client vehicle 130. The client vehicle 130 then plays this processed audio data 114. The transcoding may also involve changing the compression of the audio data 110 to output the processed audio data 114 in a different compression. Changing the compression may be beneficial where the bandwidth available to the host vehicle 120 and/or the client vehicle 130 is limited. The system 100 may transmit/receive PCM data directly when adequate bandwidth is available. The system may vary the compression of the data based on the available bandwidth.

The audio processing may also involve altering the quality of the audio data 110. In an example of operation of the system, the audio data 110 being played at a certain audio quality level in the host vehicle 120 may be degraded when played in the client vehicle 130. For example, the host vehicle 120 may be equipped with a premium audio system while the client vehicle 130 may not be equipped with a premium audio system. In another example the client vehicle 130 may be equipped with a premium audio system while the host vehicle 120 may not be equipped with a premium audio system. Thus, audio settings in the host vehicle 120 may be different than audio settings in the client vehicle 130, which may adversely affect the quality of the sound when the processed audio data 114 is played in the client vehicle 130. The differences in size of the client vehicle 130 and the host vehicle 120, the interiors of the vehicles and/or the quality of the speakers and/or amplifier in the vehicles are other examples that may play a role in affecting the quality of the sound.

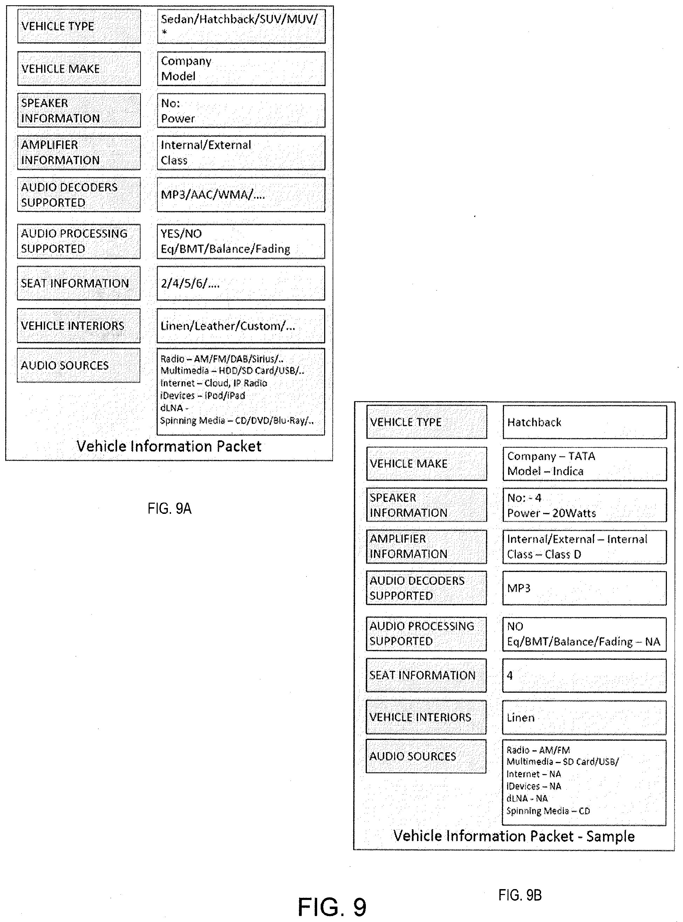

The server 140 may request client configuration information from the client vehicle 130 to determine such differences and compensate for the differences. Such client configuration information or setup information may include information about the client vehicle 130 that may pertain to the perception of the processed audio data 114 when played in the client vehicle 130. The setup information may include among several possible pieces of information, speaker information, amplifier information, a list of audio decoders supported, and/or a list of audio processing supported in the client vehicle 130. The setup information may further include, for example, a vehicle make, seat information, and vehicle interior information of the client vehicle 130. The seat information may include information regarding occupant seats in the client vehicle 130 such as number of seats, the position of the seats in relation to the speakers 450 and any other relevant information about the occupant seats. The vehicle interior information may include information such as the material of the seats, state of the vehicle's windows, whether they are open or closed, whether the vehicle's air conditioner is on or off and any other information relevant to the interior of the vehicle. FIG. 9A and 9B are examples of a setup information template and setup information. Based on such setup information, the audio processing unit 146 may convert the audio data 110 into the processed audio data 114 so that the processed audio data 114 is customized for the client vehicle 130.

In an example, based on the setup information, the audio processing unit 146 may use the equalizer 258 so that the processed audio data 114 has different equalization settings than the audio data 110. The equalization settings of the processed audio data 118 may be customized according to the setup information of the client vehicle 130. In another example, the audio processing unit 146 may use the audio compensator 266 so that the quality of the processed audio data 114 is different than the audio data 110 and the processed audio data 114 is customized according to the configuration of the client vehicle 130. In another example the host vehicle 120 may be playing 5.1 channel audio data while the client vehicle 130 may be only capable of stereo quality audio. The audio processing unit 146 may downmix the audio data 110 so that the processed audio data 114 is compatible with the client vehicle 130.

The audio processing unit 146 can similarly customize the quality of processed audio data 114 based on vehicular information of the client vehicle 130 by applying any other of the several subcomponents such as the audio down/up mixer 252, the audio signal doctor 254, the audio transcoder 256, the equalizer 258, the auto equalizer 260, the audio limiter 262, the audio panner 264, and the audio compensator 266 or a combination thereof. The audio signal doctor 254 may be a unit to repair an audio signal. Such repair may be a result of recreating signal lost during up/down mixing the audio data 110. The audio limiter 262 may be a unit to limit the audio signals so as to include/exclude audio signals within a predetermined range of audio signal strength. The audio panner 264 may be a unit to modify positional attributes associated with the audio signals, such as orientation, direction of the source of the audio signals and any other attribute that provides a listener a sense of position of the audio signals.

In an example of the vehicle to vehicle data communication system 102, there may be multiple client vehicles. The server 140 may determine a minimal set of audio processing settings required to convert the audio data 110 from the host vehicle 120 into the processed audio data 114 such that the processed audio data 114 is compatible with the multiple client vehicles. For example, the server 140 may determine a minimal set of audio formats preferred by the client vehicles based on the preferred audio format of each of the client vehicles. This may allow the audio data processing unit 146 to convert the audio data 110 into each audio format of the minimal set of preferred audio formats and transmit, to each of the client devices, the audio content in the preferred audio format corresponding to each of the client devices. In an example, the server 140 may determine only one set of audio processing settings that is common among the client vehicles. The server 140 may then process the audio data 110 such that the processed audio data 114 conforms to the one common set of audio processing settings.

In addition or alternatively, the audio processing unit 146 may be external to the server 140.

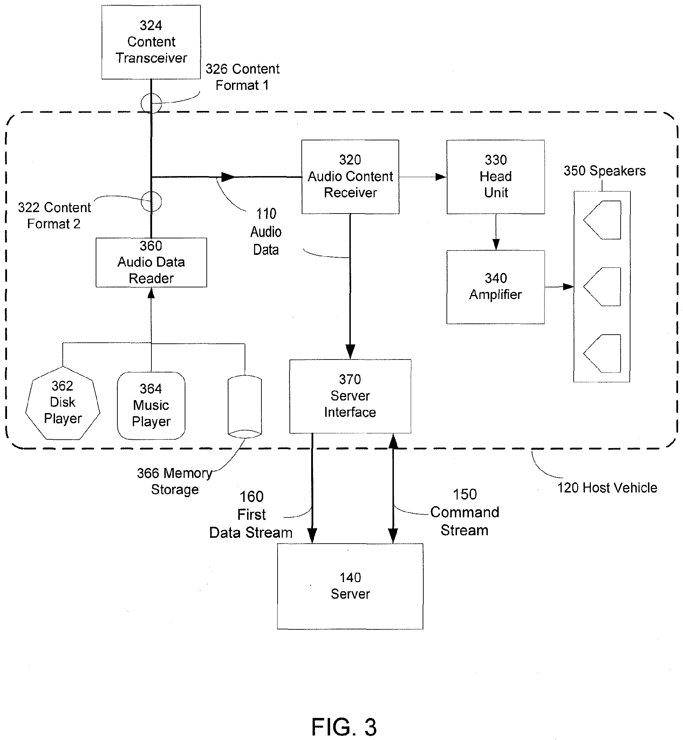

The host vehicle 120 may be any vehicle equipped with an audio system. The audio system may play back audio data according to instructions from a user. The host vehicle 120 may be a car, a truck, a sports utility vehicle, a crossover, a bus, a motorcycle, an all-terrain vehicle, an airplane, a boat, or any other type of vehicle. FIG. 3 is a block diagram of an example host vehicle 120. The host vehicle 120 may include subcomponents such as an audio content receiver 320, a head unit 330, an amplifier 340, speakers 350, an audio data reader 360, and a server interface 370. These subcomponents may comprise a streaming device that is external to the host vehicle 120 and the streaming device may be connected to the host vehicle 120.

The audio content receiver 320 may facilitate reception of the audio data 110 played back by the audio system of the host vehicle 120. The audio content receiver 320 may receive audio data 110 from various sources such as the audio data reader 360 or a content transceiver 324. A content format 322 of the audio data 110 received from the audio data reader 360 may be different than a content format 326 of the audio data 110 received from the content transceiver 324 as detailed below.

The audio data reader 360 may be a device capable of reading the audio data 110 according to instructions from the audio content receiver 320. The audio data reader 360 may read the audio data 110 from a number of sources of audio data. Such sources may include a disk player 362, or a music player 364, or a memory storage 366.

The disk player 362 may be a disk player included in the audio system of the host vehicle 120. In another example, the disk player 362 may be external to the host vehicle 120. In another example, the disk player 362 may be a multiple-disk player equipped with a changer module that enables a user to load and choose from a number of disks to play audio content from. The disk player 362 may be able to decipher disks of various formats such as pulse code modulation format, MP3, WMV, WAV, AAC or any other audio format. The disk player 362 may also be able to decipher various disk types such as CD-R, CD-RW, DVD+R, DVD-R, DVD+RW, DVD-RW, DVD-RAM, magnetic tape. As used herein, the disk player 362 may be a player capable of deciphering one or a combination of such disks.

The music player 364 may be a music player pluggable in to the audio system of the host vehicle 120. In an example, the music player 364 may communicate by wired connection, such as by being plugged in to the audio system via a USB outlet. In another example, wired connection of the music player 364 may be plugged in to the audio system via an audio jack. In yet another example, the wired connection of the music player 364 may be plugged in to the audio system via a special adapter for the music player 364 or the audio system. In still other examples, the music player 364 may communicate by wireless communication with the audio data reader 360, such as by short range wireless transmission, for example BLUETOOTH®.

The music player 364 may be capable of storing the audio data 110 on a storage memory included in the music player 364. The music player 364 may be capable of storing the audio data 110 in various audio data formats such as pulse code modulation format, MP3, WMV, WAV, AAC or any other format. In another example, the music player 364 may be capable of receiving the audio data 110 via a wireless medium such as 3G/4G/EDGE network, FM/AM radio waves, WI-FI® (a registered trademark of Wireless Ethernet Compatibility Alliance, Inc. of Austin, Texas) or any other network. As used herein, the music player 364 can be software application being executed by a processor on a device such as an MP3 player, a laptop computer, a netbook computer, or a smartphone or any other device equipped with a processor capable of providing audio content for use by the system.

The memory storage 366 may be memory storage incorporated in the audio system of the host vehicle 120. The memory may be any device for storing and retrieving data, computer code, instructions, or any combination thereof. The memory storage 366 may include non-volatile and/or volatile memory, such as a random access memory (RAM), a read-only memory (ROM), an erasable programmable read-only memory (EPROM), or flash memory. Alternatively or in addition, the memory storage 366 may include an optical, magnetic (hard-drive) or any other form of data storage device. In another example, the memory storage 366 may be an external memory storage unit plugged in to the audio system. The external memory storage unit may be plugged in to the audio system via a data transfer port compatible with at least one of the several data transfer protocols such as USB, serial data transfer. The memory storage 366 may also be connected via a data transfer port such as a SATA port. The memory storage 366 may be capable of storing the audio data in various audio data formats such as pulse code modulation format, MP3, WMV, WAV, AAC or any other format.

The audio data reader 360 may read the audio data 110 from at least one of such sources of audio data and forward the audio data 110 to the audio content receiver 320. The audio content receiver 320 may also receive the audio data 110 from the content transceiver 324.

The content transceiver 324 may be source of audio content where the audio content is transmitted to the content transceiver 324 via a wireless medium. In one example, the content transceiver 324 may be a FM/AM radio station. In another example, the content transceiver 324 may be a satellite radio station. In another example, the content transceiver 324 may be a music subscription service provider such as a web service which transmits audio content to devices such as music players or smartphones or any other devices equipped to receive such audio content. The content transceiver 324 may be capable of receiving and/or transmitting data from/to data sources via one or a combination of medium such as AM/FM radio, HD radio, DAB, SDARS, DMG and other data sources. In an example of the system, the content transceiver 324 may communicate with the host vehicle 120 via the server interface 370.

The host vehicle 120 may facilitate playing the audio data 110 received by the audio content receiver 320. The host vehicle 120 may be able to accomplish the playback of the audio data 110 using the head unit 330, the amplifier 340 and the speakers 350.

The head unit 330 may be a digital signal processor, a microprocessor or any generic processing unit that processes and converts the audio data 110 into audio signals transmitted to the amplifier 340. The head unit 330 may include a memory unit that may store instructions according to which the head unit 330 operates. The memory unit of the head unit 330 may also be a cache memory or a volatile memory or a non-volatile memory. The head unit 330 may receive the audio data 110 from the audio content receiver 320 and process the audio data 110 before transmitting the resulting audio signals to the amplifier 340. In addition, or alternatively, the head unit 330 may be implemented in software consisting of instructions executable by a processor.

The amplifier 340 is a device which processes and amplifies the audio signals from the head unit 330 and communicates the amplified audio signals to the speakers 350.

The speakers 350 may be a set of multiple speakers located in the host vehicle 120. The speakers 350 may be located in a panel, in a seat, in a door, or any other location in the host vehicle 120. The speakers 350 may be driven by the amplified audio signals received from the amplifier 340 and produce audible sound in response to the audio signals.

The processing of the audio data 110, by the head unit 330, may affect the sound output by the speakers 350. The processing may involve Analog-to-Digital conversion and/or Digital-to-Analog conversion of the audio data 110. In another example, the processing may involve transmission of the audio data 110 in a direct manner to the amplifier 340. In yet another example, the processing of the audio data 110 may involve equalization of the audio signals in the audio data 110. The head unit 330 may be able to provide a set sound effect. For example, the sound effect may include 5.1, 6.1 or 7.1 surround, low frequency sound enhancing, bass boost, and graphic equalization presets such as jazz, pop, rock, flat and other presets. The head unit 330 may also enable a user to customize the sound effect. Such sound effects may be applied automatically or based on a user selection. The sound which is output by the speakers 350 may include inherent properties. The properties of the sound may include at least one of frequency, waveform, delay time, volume according to a frequency band and left/right balance. The operations of the head unit 330 may adjust the properties of the sound output by the speakers 350.

The server interface 370 may be a network interface capable of receiving and transmitting data over a network. The server interface 370 may be a network interface card (NIC). Alternatively or in addition, the server interface 370 may include an embedded component as part of a circuit board, a computer mother board, a router, an expansion card, a printer interface, a USB (universal serial bus) device, or as part of any other hardware. The network may include a local area network (LAN), a wireless local area network (WLAN), a WI-FI® (a registered trademark of Wireless Ethernet Compatibility Alliance, Inc. of Austin, Texas) network, a personal area network (PAN), a wide area network (WAN), the Internet, an Internet Protocol (IP) network, any other communications network, or any combination thereof. The network may utilize any protocol of 3G/4G/EDGE/4G LTE, Bluetooth® (a registered trademark of Bluetooth Sig, Inc. of Kirkland, Washington), WiMax® (a registered trademark of WiMax Forum of San Diego, California), GPRS, UMTS, HSDPA, HSPA or any other protocol or any combination thereof. The server interface 370 may be capable to switch between one network and another network seamlessly. The server interface 370 may transmit and receive the command stream 150 to and from the server 140. The server interface 370 may also and also transmit the first data stream 160 to the server 140. The first data stream 370 may include the audio data 110 that is being played in the host vehicle 120.

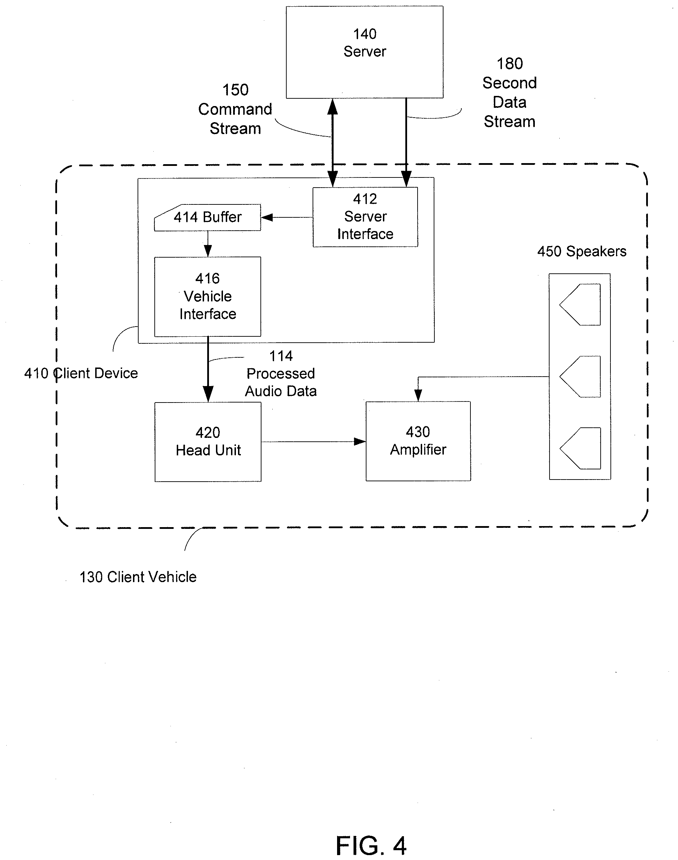

FIG. 4 is a block diagram of an example client vehicle 130. The client vehicle 130 may be any vehicle equipped with an audio system. The client vehicle 130 may be a car, a truck, a sports utility vehicle, a crossover, a bus, a motorcycle, an all-terrain vehicle, a boat, an airplane, or any other type of vehicle. The client vehicle 130 may, for example, be equipped with a client device 410, a head unit 420, an amplifier 430 and speakers 450. In some examples, the amplifier 430 may be excluded. The client device 410 may receive the processed audio data 114 from the server 140 and further transfer the processed audio data 114 to the head unit 420. The head unit 420 in turn may further process the processed audio data 114 and transfer the audio signals to the amplifier 430. The amplifier 430 may forward the amplified audio signals to the speakers 450 to produce the sounds corresponding to the processed audio data 114.

The client device 410 may include hardware, software or a combination of hardware and software to handle the processed audio data 114 from the server 140. The client device may be embedded in the client vehicle 130 or alternatively an external device that connects to an audio system in the client vehicle 130. To handle the processed audio data 114, the client device may include at least a server interface 412, a buffer 414, and a vehicle interface 416.

The server interface 412 may be a network interface capable of receiving and transmitting data over a network. The server interface 412 may be a network interface card (NIC). Alternatively or in addition, the server interface 412 may include an embedded component as part of a circuit board, a computer mother board, a router, an expansion card, a printer interface, a USB (universal serial bus) device, or as part of any other hardware. The network may include a local area network (LAN), a wireless local area network (WLAN), a WI-FI® (a registered trademark of Wireless Ethernet Compatibility Alliance, Inc. of Austin, Texas) network, a personal area network (PAN), a wide area network (WAN), the Internet, an Internet Protocol (IP) network, any other communications network, or any combination thereof. The network may utilize any protocol of 3G/4G/EDGE/4G LTE, Bluetooth® (a registered trademark of Bluetooth Sig, Inc. of Kirkland, Washington), WiMax® (a registered trademark of WiMax Forum of San Diego, California), GPRS, UMTS, HSDPA, HSPA or any other protocol or any combination thereof. The server interface 412 may be capable to switch between one network and another network seamlessly. The server interface 412 may transmit and receive the command stream 150 to and from the server 140. The server interface 412 may also receive the second data stream 180 from the server 140. The second data stream 180 may include the processed audio data 114 which the server interface 412 buffers using the buffer 414.

In an example of the system, the server interface 412 of the client vehicle 130 may communicate with the server 140 over the same network as the server interface 370 of the host vehicle 120. Thus, for example the two server interfaces 412 and 370 may interact with the server 140 over a wireless network provided by a particular network provider. Alternatively, the two server interfaces 412 and 370 may interact with the server 140 via the same Wi-Fi® network being provided by a particular hotspot. In another example, server interface 412 may communicate with the server 140 over a different network than the server interface 370. For instance, the server interface 412 of the client vehicle 130 may connect to the server 140 via a 4G wireless network while the server interface 370 of the host vehicle 120 may connect via a Wi-Fi®. The communication may also be via any other combination of the networks previously discussed.

The buffer 414 is a non-transitory computer readable storage medium to buffer the processed audio data 114 from the server received at the client device 410. The buffer 414 may be any device for storing and retrieving data or any combination thereof. The buffer 414 may include non-volatile and/or volatile memory, such as a random access memory (RAM), or flash memory. Alternatively or in addition, the buffer 414 may include an optical, magnetic (hard-drive) or any other form of data storage device.

The client device 410 may determine how much of the received processed audio data 114 needs to be buffered based on the size of the buffer 414 as well as signal strength of the network used by the server interface 412. The signal strength may be a measurement of the power present in a signal received on the network. The server interface may measure the signal strength using units such as the received signal strength indicator (RSSI) or any other signal strength measure. For example, if the signal strength is above a certain threshold, or in relative terms, if the signal strength is good, the client device 410 may buffer larger amounts of the processed audio data 114 and make the necessary requests to the server 140 for more processed audio data 114. This would allow the client device 410 to have processed audio data to forward to the head unit 420 even when the signal strength drops below the threshold, or if the network temporarily is unavailable. Such situations can commonly occur with the client vehicle 130 since the signal strength of the network can vary such that the signal strength might be stronger in certain geographic locations and lower in other geographic locations such as in tunnels, or among tall buildings. Thus, the client device may compensate for such signal strength variance by buffering a variable amount of the processed audio data 114 based on the signal strength.

The client device 410 may command the server 140 to transmit the processed audio data 114 at a faster rate when the signal strength is above a pre-determined threshold. The server 140 in turn would command the host device 120 to transmit the audio data 110 at a faster rate to comply with the command from the client device 410. The client device 410 may also command the server 140 and in turn the host device 120 to reduce the transfer rate if the buffer 414 reaches or is about to reach buffer capacity. Such commands from the client device 410 and the server 140 may be transmitted across the command stream 150 and processed by the non-audio processing unit 144 of the server 140. The processed audio data 114 stored in the buffer 414 may then be played by the audio system in the client vehicle 130 by accessing the processed audio data 114 via the vehicle interface 416.

The vehicle interface 416 of the client device 410 may include hardware, or software, or a combination of both to integrate the client device 410 with the client vehicle 130. The integration involves transfer of data back and forth between the client vehicle 130 and the client device 410. The vehicle interface 416 may transfer the processed audio data 114 from the buffer 414 to the head unit 420 and receive vehicular information from the client vehicle 130.

The head unit 420 may be a digital signal processor, a microprocessor or any generic processing unit that processes and converts the processed audio data 114 into audio signals transmitted to the amplifier 430. The head unit 420 may include a memory unit that may store instructions according to which the head unit 420 operates. The memory unit of the head unit 420 may also be a cache memory or a volatile memory or a non-volatile memory. The head unit 420 may receive the processed audio data 114 from the vehicle interface 416 of the client device 410 and further process the processed audio data 114 before transmitting the resulting audio signals to the amplifier 430. The further processing of the processed audio data 114, by the head unit 420, may affect the sound output by the speakers 450. The processing may involve Analog-to-Digital conversion and/or Digital-to-Analog conversion of the processed audio data 114. In another example, the processing may involve transmission of the processed audio data 114 in a direct manner to the amplifier 430. In yet another example, the further processing of the processed audio data 114 may involve equalization of the audio signals in the processed audio data 114. The head unit 420 may be able to provide a set sound effect. For example, the sound effect may include 3D surround effect, low-sound enhancing, jazz, pop, rock, and flat etc. The head unit 420 may also provide a user to customize the sound effect. Such sound effects may be applied automatically or based on a user selection. The sound which is output by the speakers 450 has an inherent property. The property of the sound may include at least one of frequency, waveform, delay time, volume according to a frequency band and left/right balance. The operations of the head unit 420 may adjust the property of the sound output by the speakers 450.

The amplifier 430 may be a device which processes and amplifies the audio signals from the head unit 420 and communicates the amplified audio signals to the speakers 450.

The speakers 450 may be a set of multiple speakers to produce sound for the occupants of the client vehicle 130. The speakers 450 may be located in a panel, in a seat, in a door, or any other feasible location in the client vehicle 130. The speakers 450 receive the amplified audio signals from the amplifier 430 and produce sound in response to being driven by the audio signals.

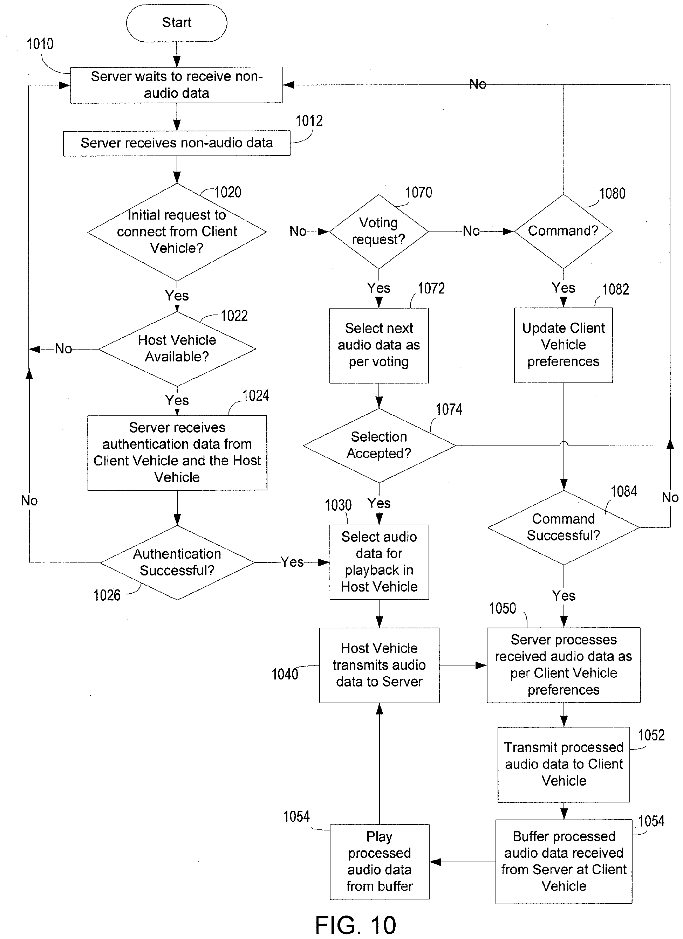

FIG. 10 is an operational flow diagram of example operation of the vehicle to vehicle data communication system. As depicted in step 1010, server 140 may wait in a loop to receive communication from the client vehicle 130 or the host vehicle 120 to begin the vehicle to vehicle communication. In one example, the server 140 may receive non-audio data 118 from the client vehicle 130 at in step 1012. The non-audio data 118 may be an connection request to connect from the client vehicle 130. The server 140 may then check for availability of the host vehicle 120 requested by the connection request. If the host vehicle 120 is not available, the server 140 may go back to its waiting state; else, if the host vehicle 120 is available, the server may attempt to authenticate the client vehicle 130 and the host vehicle 120. After succeeding with the authentication in step 1026, the server 140 may establish a connection between the client vehicle 130 and the host vehicle 120 via the server 140. The successful authentication may be followed by step 1030 in which the audio data 110 is selected to be played in the host vehicle 120. The selection may be based on votes from the client vehicle 130 and/or the host vehicle 120 as shown by steps 1070 and 1072. The host vehicle 120 may accept or reject the selection as indicated by step 1074. The host vehicle 120 may then transfer the audio data 110 to the server 140 through the first data stream 160. The server 140 may process the audio data 110 to produce the processed audio data 114 (step 1050) as per preferences of the client device 130 which may include a preferred audio format and/or any setup information from the client device 130. The client device 130 may update such preferences used during the audio processing via the server 140 as depicted by steps 1080 and 1082. The command may succeed or fail as indicated by step 1084. Such processed audio data 114 is then transmitted to the client vehicle 130 through the second data stream 180. The client vehicle 130 may buffer part of the processed audio data 114 for playback. The client vehicle 130 may determine length of processed audio data 114 to buffer according to network signal strength. The client vehicle 130 may play the processed audio data 114 from the buffer 414. Thus, in this example both the host vehicle 120 and the client vehicle 130 may play substantially the same audio content.

While various embodiments of the invention have been described, it will be apparent to those of ordinary skill in the art that many more embodiments and implementations are possible within the scope of the invention. Accordingly, the invention is not to be restricted except in light of the attached claims

## Claims

1. A method to communicate audio data between vehicles in a vehicle data communication system comprising a server (140), the method comprising:
receiving, by a network interface (142, 148) of the server (140), a transmission request from a client device (130) in a first vehicle, the transmission request being a request to transmit selected audio data (110, 114) to the client device, the selected audio data (110, 114) being currently played in a second vehicle (120) and selected by voting data received by the network interface (142, 148) from the first vehicle and indicating a selection of the audio data by the first vehicle;
receiving, by the network interface (142, 148), a data stream from the second vehicle (120), the data stream including the selected audio data (110, 114) being currently played in the second vehicle;
receiving, by the network interface (142, 148), client information from the client device (130), wherein the client device (130) is connected to the first vehicle and the client information includes at least one of a vehicle make, occupant seat position information, and interior information of the first vehicle, and at least two of speaker information, amplifier information, and a list of audio decoders supported;
processing, by a processor (270), of the server (140), the selected audio data (110, 114) received in the data stream, the processing based on the client information and wherein the processing includes equalization of the processed audio data in accordance with the client information; and
transmitting by the server (140), to the client device (130), the processed audio data (114).

2. The method of claim 1, further comprising authenticating, by the processor (270), identity of the first vehicle and identity of the second vehicle.

3. The method of claim 2, where the second vehicle transmits the data stream to a server over a first network and the server transmits the processed audio data (114) to the client device over a second network.

4. The method of claim 3, further comprising buffering, by the client device (130), the processed audio data (114), where the client device determines the amount of buffered audio data based on signal strength of the second network.

5. The method of one of claims 1-4, where the content of the selected audio data (110, 114) is in a different compression format than the selected audio data received in the data stream and the compression format is based on available bandwidth.

6. The method of one of claims 1-5, further comprising receiving a command from the client device (130), where the processor processes the selected audio data based on the command or transmitting a plurality of commands to the server, the commands dictating to the server selection of the selected audio data and customization to be performed on the selected audio data.

7. The method of one of claims 1-6, where the selected audio data being currently played in the second vehicle (120), is received from at least one of a content transceiver or an audio data reader, and wherein the non-audio data comprises voting data received from a voting unit of the first vehicle..

8. A vehicle-to-vehicle communication system comprising a server (140), the server comprising a memory (272) and a processor (270), wherein the processor (270) is configured to:
receive a connection request from each client device (130) of a plurality of client devices, the connection request including a unique identifier of a host device (120);
receive voting data from the client device (130) indicating a selection of the audio data by the client device (130);
establish a connection between the host device (120) and the client devices (130) based on the unique identifier and an authentication token;
receive a data stream from the host device (120), the data stream including selected audio data (110, 114), the selected audio data being played by the host device (120) and selected by the voting data ;
receive from each of the client devices (130) a corresponding preferred audio processing settings;
customize the selected audio data (110, 114) based on the preferred audio processing settings corresponding to each of the client devices (130); and
transmit to each of the client devices (130) the selected audio data (110, 114), customized according to the audio processing settings corresponding to each respective client device (130);
and wherein the processor (270) is further configured to:
receive setup information from a first client device (130) of the client devices included in a vehicle, wherein the setup information includes at least one of speaker information, amplifier information, a list of audio decoders supported, a list of audio processing supported, a vehicle make, occupant seat position information, and vehicle interior information related to the vehicle; and
customize the selected audio data (110, 114) transmitted to the first client device based on the setup information before the transmission.

9. The system of claim 8, where communication received from the host device (120) is received over a first network and communication received from a first client device from the client devices is received over a second network or where the processor is configured to transmit to a server a buffer rate, the buffer rate indicates the rate at which the server transmits customized audio data, where the buffer rate is based on the signal strength of the network.

10. The system of claim 9, where the processor is further configured to transmit the converted selected audio data (110, 114) to the first client device (130) according to the buffer rate, the buffer rate determined by the first client device based on a signal strength of the second network.

11. The system of one of claims 8-10, where the processor (270) is further configured to determine a minimal set of preferred audio processing settings based on the preferred audio processing settings of each of the client devices or where the processor is further configured to:
receive a vote from each of the client devices, the vote indicating a request for a particular audio data;
aggregate a final vote from the vote from each of the client devices; and
determine the selected audio data (110, 114) from the aggregate;
transmit a command to the host device, the command indicating the selected audio data and a request to play the selected audio data.

12. The system of claim 11, where the processor (270) is further configured to customize the selected audio data based on each preferred audio processing settings of the minimal set of preferred audio processing settings or where the customized audio data is in an audio format compatible with the audio system of the vehicle and the customized audio data is equalized based on the vehicular information.

## Patentansprüche

1. Verfahren zum Kommunizieren von Audiodaten zwischen Fahrzeugen in einem Fahrzeugdatenkommunikationssystem, das einen Server (140) umfasst, wobei das Verfahren Folgendes umfasst:
Empfangen, durch eine Netzwerkschnittstelle (142, 148) des Servers (140), einer Übertragungsanforderung von einer Client-Vorrichtung (130) in einem ersten Fahrzeug, wobei die Übertragungsanforderung eine Anforderung ist, ausgewählte Audiodaten (110, 114) an die Client-Vorrichtung zu übertragen, wobei die ausgewählten Audiodaten (110, 114) aktuell in einem zweiten Fahrzeug (120) abgespielt und durch Abstimmdaten ausgewählt werden, die durch die Netzwerkschnittstelle (142, 148) von dem ersten Fahrzeug empfangen werden und eine Auswahl der Audiodaten durch das erste Fahrzeug angeben;
Empfangen, durch die Netzwerkschnittstelle (142, 148), eines Datenstroms von dem zweiten Fahrzeug (120), wobei der Datenstrom die ausgewählten Audiodaten (110, 114) beinhaltet, die aktuell in dem zweiten Fahrzeug abgespielt werden;
Empfangen, durch die Netzwerkschnittstelle (142, 148), von Client-Informationen von der Client-Vorrichtung (130), wobei die Client-Vorrichtung (130) mit dem ersten Fahrzeug verbunden ist und die Client-Informationen zumindest eines von einem Fahrzeugmodell, Insassensitzpositionsinformationen und Inneninformationen des ersten Fahrzeugs und zumindest zwei von Lautsprecherinformationen, Verstärkerinformationen und einer Liste mit unterstützten Audiodecodern beinhalten;
Verarbeiten, durch einen Prozessor (270) des Servers (140), der ausgewählten Audiodaten (110, 114), die in dem Datenstrom empfangen werden, wobei das Verarbeiten auf den Client-Informationen basiert und wobei das Verarbeiten Entzerrung der verarbeiteten Audiodaten gemäß den Client-Informationen beinhaltet; und
Übertragen der verarbeiteten Audiodaten (114) durch den Server (140) an die Client-Vorrichtung (130).

2. Verfahren nach Anspruch 1, ferner umfassend das Authentifizieren, durch den Prozessor (270), von Identität des ersten Fahrzeugs und Identität des zweiten Fahrzeugs.

3. Verfahren nach Anspruch 2, wobei das zweite Fahrzeug den Datenstrom an einen Server über ein erstes Netzwerk überträgt und der Server die verarbeiteten Audiodaten (114) an die Client-Vorrichtung über ein zweites Netzwerk überträgt.

4. Verfahren nach Anspruch 3, ferner umfassend das Puffern der verarbeiteten Audiodaten (114) durch die Client-Vorrichtung (130), wobei die Client-Vorrichtung die Menge an gepufferten Audiodaten basierend auf Signalstärke des zweiten Netzwerks bestimmt.

5. Verfahren nach einem der Ansprüche 1-4, wobei der Inhalt der ausgewählten Audiodaten (110, 114) in einem anderen Komprimierungsformat ist als die ausgewählten Audiodaten, die in dem Datenstrom empfangen werden, und das Komprimierungsformat auf verfügbarer Bandbreite basiert.

6. Verfahren nach einem der Ansprüche 1-5, ferner umfassend das Empfangen eines Befehls von der Client-Vorrichtung (130), wobei der Prozessor die ausgewählten Audiodaten basierend auf dem Befehl verarbeitet, oder das Übertragen einer Vielzahl von Befehlen an den Server, wobei die Befehle dem Server Auswahl der ausgewählten Audiodaten und an den ausgewählten Audiodaten durchzuführende Anpassung vorgeben.

7. Verfahren nach einem der Ansprüche 1-6, wobei die ausgewählten Audiodaten, die aktuell in dem zweiten Fahrzeug (120) abgespielt werden, von zumindest einem von einem Inhaltssendeempfänger oder einem Audiodatenleser empfangen werden, und wobei die Nichtaudiodaten Abstimmdaten umfassen, die von einer Abstimmeinheit des ersten Fahrzeugs empfangen werden.

8. Fahrzeug-zu-Fahrzeug-Kommunikationssystem, umfassend einen Server (140), wobei der Server einen Speicher (272) und einen Prozessor (270) umfasst, wobei der Prozessor (270) für Folgendes konfiguriert ist:
Empfangen einer Verbindungsanforderung von jeder Client-Vorrichtung (130) aus einer Vielzahl von Client-Vorrichtungen, wobei die Verbindungsanforderung eine einmalige Kennung einer Host-Vorrichtung (120) beinhaltet;
Empfangen von Abstimmdaten von der Client-Vorrichtung (130), die eine Auswahl der Audiodaten durch die Client-Vorrichtung (130) angeben;
Herstellen einer Verbindung zwischen der Host-Vorrichtung (120) und den Client-Vorrichtungen (130) basierend auf der einmaligen Kennung und einem Authentifizierungstoken;
Empfangen eines Datenstroms von der Host-Vorrichtung (120), wobei der Datenstrom ausgewählte Audiodaten (110, 114) beinhaltet, wobei die ausgewählten Audiodaten durch die Host-Vorrichtung (120) abgespielt und durch die Abstimmdaten ausgewählt werden;
Empfangen von entsprechenden bevorzugten Audioverarbeitungseinstellungen von jeder der Client-Vorrichtungen (130);
Anpassen der ausgewählten Audiodaten (110, 114) basierend auf den bevorzugten Audioverarbeitungseinstellungen entsprechend jeder der Client-Vorrichtungen (130); und
Übertragen der ausgewählten Audiodaten (110, 114), angepasst gemäß den Audioverarbeitungseinstellungen entsprechend jeder jeweiligen Client-Vorrichtung (130), an jede der Client-Vorrichtungen (130);
und wobei der Prozessor (270) ferner für Folgendes konfiguriert ist:
Empfangen von Einrichtungsinformationen von einer ersten Client-Vorrichtung (130) der Client-Vorrichtungen, die in einem Fahrzeug enthalten sind, wobei die Einrichtungsinformationen zumindest eines von Lautsprecherinformationen, Verstärkerinformationen, einer Liste mit unterstützten Audiodecodern, einer Liste mit unterstützter Audioverarbeitung, einem Fahrzeugmodell, Insassensitzpositionsinformationen und Fahrzeuginneninformationen in Bezug auf das Fahrzeug beinhalten; und
Anpassen der ausgewählten Audiodaten (110, 114), die an die erste Client-Vorrichtung übertragen werden, basierend auf den Einrichtungsinformationen vor der Übertragung.

9. System nach Anspruch 8, wobei Kommunikation, die von der Host-Vorrichtung (120) empfangen wird, über ein erstes Netzwerk empfangen wird, und Kommunikation, die von einer ersten Client-Vorrichtung aus den Client-Vorrichtungen empfangen wird, über ein zweites Netzwerk empfangen wird, oder wobei der Prozessor konfiguriert ist, um eine Pufferrate an einen Server zu übertragen, wobei die Pufferrate die Rate angibt, bei der der Server angepasste Audiodaten überträgt, wobei die Pufferrate auf der Signalstärke des Netzwerks basiert.

10. System nach Anspruch 9, wobei der Prozessor ferner konfiguriert ist, um die umgewandelten ausgewählten Audiodaten (110, 114) an die erste Client-Vorrichtung (130) gemäß der Pufferrate zu übertragen, wobei die Pufferrate durch die erste Client-Vorrichtung basierend auf einer Signalstärke des zweiten Netzwerks bestimmt wird.

11. System nach einem der Ansprüche 8-10, wobei der Prozessor (270) ferner konfiguriert ist, um einen Mindestsatz an bevorzugten Audioverarbeitungseinstellungen basierend auf den bevorzugten Audioverarbeitungseinstellungen von jeder der Client-Vorrichtungen zu bestimmen oder wobei der Prozessor ferner für Folgendes konfiguriert ist:
Empfangen einer Abstimmung von jeder der Client-Vorrichtungen, wobei die Abstimmung eine Anforderung von bestimmten Audiodaten angibt;
Aggregieren einer finalen Abstimmung von der Abstimmung von jeder der Client-Vorrichtungen; und
Bestimmen der ausgewählten Audiodaten (110, 114) aus dem Aggregat;
Übertragen eines Befehls an die Host-Vorrichtung, wobei der Befehl die ausgewählten Audiodaten und eine Anforderung zum Abspielen der ausgewählten Audiodaten angibt.

12. System nach Anspruch 11, wobei der Prozessor (270) ferner konfiguriert ist, um die ausgewählten Audiodaten basierend auf jeder bevorzugten Audioverarbeitungseinstellung des Mindestsatzes an bevorzugten Audioverarbeitungseinstellungen anzupassen oder wobei die angepassten Audiodaten in einem Audioformat sind, das mit dem Audiosystem des Fahrzeugs kompatibel ist und die angepassten Audiodaten basierend auf den Fahrzeuginformationen entzerrt werden.

## Revendications

1. Procédé pour communiquer des données audio entre véhicules dans un système de communication de données de véhicule comprenant un serveur (140), le procédé comprenant :
la réception, par une interface réseau (142, 148) du serveur (140), d'une requête de transmission en provenance d'un dispositif client (130) dans un premier véhicule, la requête de transmission étant une requête pour transmettre des données audio sélectionnées (110, 114) au dispositif client, les données audio sélectionnées (110, 114) étant actuellement lues dans un second véhicule (120) et sélectionnées par des données de vote reçues par l'interface réseau (142, 148) en provenance du premier véhicule et indiquant une sélection des données audio par le premier véhicule ;
la réception, par l'interface réseau (142, 148), d'un flux de données en provenance du second véhicule (120), le flux de données comportant les données audio sélectionnées (110, 114) qui sont actuellement lues dans le second véhicule ;
la réception, par l'interface réseau (142, 148), d'informations client en provenance du dispositif client (130), dans lequel le dispositif client (130) est connecté au premier véhicule et les informations client comportent une marque de véhicule, des informations de position de siège d'occupant et/ou des informations d'intérieur du premier véhicule, et au moins deux parmi des informations de haut-parleur, des informations d'amplificateur, et une liste de décodeurs audio pris en charge ;
le traitement, par un processeur (270), du serveur (140), des données audio sélectionnées (110, 114) reçues dans le flux de données, le traitement étant basé sur les informations client et dans lequel le traitement comporte l'égalisation des données audio traitées conformément aux informations client ; et
la transmission par le serveur (140), au dispositif client (130), des données audio traitées (114).

2. Procédé selon la revendication 1, comprenant en outre l'authentification, par le processeur (270), de l'identité du premier véhicule et de l'identité du second véhicule.

3. Procédé selon la revendication 2, dans lequel le second véhicule transmet le flux de données à un serveur sur un premier réseau et le serveur transmet les données audio traitées (114) au dispositif client sur un second réseau.

4. Procédé selon la revendication 3, comprenant en outre la mise en mémoire tampon, par le dispositif client (130), des données audio traitées (114), dans lequel le dispositif client détermine la quantité de données audio mises en mémoire tampon sur la base de l'intensité du signal du second réseau.

5. Procédé selon l'une des revendications 1 à 4, dans lequel le contenu des données audio sélectionnées (110, 114) est dans un format de compression différent de celui des données audio sélectionnées reçues dans le flux de données et le format de compression est basé sur la bande passante disponible.

6. Procédé selon l'une des revendications 1 à 5, comprenant en outre la réception d'une commande en provenance du dispositif client (130), dans lequel le processeur traite les données audio sélectionnées sur la base de la commande ou la transmission d'une pluralité de commandes au serveur, les commandes imposant au serveur la sélection des données audio sélectionnées et la personnalisation à réaliser sur les données audio sélectionnées.

7. Procédé selon l'une des revendications 1 à 6, dans lequel les données audio sélectionnées qui sont actuellement lues dans le second véhicule (120), sont reçues en provenance d'au moins l'un parmi un émetteur-récepteur de contenu ou un lecteur de données audio, et dans lequel les données non audio comprennent des données de vote reçues en provenance d'une unité de vote du premier véhicule.

8. Système de communication de véhicule à véhicule comprenant un serveur (140), le serveur comprenant une mémoire (272) et un processeur (270), dans lequel le processeur (270) est configuré pour :
recevoir une requête de connexion en provenance de chaque dispositif client (130) d'une pluralité de dispositifs clients, la requête de connexion comportant un identifiant unique d'un dispositif hôte (120) ;
recevoir des données de vote en provenance du dispositif client (130) indiquant une sélection des données audio par le dispositif client (130) ;
établir une connexion entre le dispositif hôte (120) et les dispositifs clients (130) sur la base de l'identifiant unique et d'un jeton d'authentification ;
recevoir un flux de données en provenance du dispositif hôte (120), le flux de données comportant des données audio sélectionnées (110, 114), les données audio sélectionnées étant lues par le dispositif hôte (120) et sélectionnées par les données de vote ;
recevoir en provenance de chacun des dispositifs clients (130) des réglages de traitement audio préférés correspondants ;
personnaliser les données audio sélectionnées (110, 114) sur la base des réglages de traitement audio préférés correspondant à chacun des dispositifs clients (130) ; et
transmettre à chacun des dispositifs clients (130) les données audio sélectionnées (110, 114), personnalisées en fonction des réglages de traitement audio correspondant à chaque dispositif client (130) respectif ;
et dans lequel le processeur (270) est en outre configuré pour :
recevoir, en provenance d'un premier dispositif client (130), des informations d'installation des dispositifs clients inclus dans un véhicule, dans lequel les informations d'installation comportent des informations de haut-parleur, des informations d'amplificateur, une liste de décodeurs audio pris en charge, une liste de traitement audio pris en charge, une marque de véhicule, des informations de position de siège d'occupant et/ou des informations d'intérieur de véhicule liées au véhicule ; et
personnaliser les données audio sélectionnées (110, 114) transmises au premier dispositif client sur la base des informations d'installation avant la transmission.

9. Système selon la revendication 8, dans lequel la communication reçue en provenance du dispositif hôte (120) est reçue sur un premier réseau et la communication reçue en provenance d'un premier dispositif client des dispositifs clients est reçue sur un second réseau ou dans lequel le processeur est configuré pour transmettre à un serveur un débit de mémoire tampon, le débit de mémoire tampon indique le débit auquel le serveur transmet des données audio personnalisées, dans lequel le débit de mémoire tampon est basé sur l'intensité de signal du réseau.

10. Système selon la revendication 9, dans lequel le processeur est en outre configuré pour transmettre les données audio sélectionnées converties (110, 114) au premier dispositif client (130) en fonction du débit de mémoire tampon, le débit de mémoire tampon étant déterminé par le premier dispositif client sur la base d'une intensité de signal du second réseau.

11. Système selon l'une des revendications 8 à 10, dans lequel le processeur (270) est en outre configuré pour déterminer un ensemble minimal de réglages de traitement audio préférés sur la base des réglages de traitement audio préférés de chacun des dispositifs clients ou dans lequel le processeur est en outre configuré pour :
recevoir un vote en provenance de chacun des dispositifs clients, le vote indiquant une requête pour des données audio particulières ;
agréger un vote final à partir du vote en provenance de chacun des dispositifs clients ; et
déterminer les données audio sélectionnées (110, 114) à partir de l'agrégat ;
transmettre une commande au dispositif hôte, la commande indiquant les données audio sélectionnées et une requête de lecture des données audio sélectionnées.

12. Système selon la revendication 11, dans lequel le processeur (270) est en outre configuré pour personnaliser les données audio sélectionnées sur la base de chaque réglage de traitement audio préféré de l'ensemble minimal de réglages de traitement audio préférés ou dans lequel les données audio personnalisées sont dans un format audio compatible avec le système audio du véhicule et les données audio personnalisées sont égalisées sur la base des informations de véhicule.
